(19) **Europäisches Patentamt / European Patent Office / Office européen des brevets**

(11) **EP 2 882 109 B1**

(12) # EUROPEAN PATENT SPECIFICATION

(45) Date of publication and mention
of the grant of the patent:
**01.02.2017 Bulletin 2017/05**

(51) Int Cl.:
*H04B 3/40* *(2006.01)*   *H04B 3/54* *(2006.01)*
*H04B 17/391* *(2015.01)*   *H04B 3/466* *(2015.01)*

(21) Application number: **14196622.6**

(22) Date of filing: **05.12.2014**

(54) **Emulation apparatus of complex cabled electric networks for data transmission and corresponding production method**

Emulationsvorrichtung komplexer verkabelten elektrischen Netzwerken zur Datenübertragung und entsprechendes Herstellungsverfahren

Appareil d'émulation de réseaux électriques complexes câblés pour la transmission de données et méthode de production correspondante

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2013 IT UD20130166**

(43) Date of publication of application:
**10.06.2015 Bulletin 2015/24**

(73) Proprietor: **Witikee SRL**
**33100 Udine (IT)**

(72) Inventors:
• **Versolatto, Fabio**
**33037 Pasian di Prato (UD) (IT)**
• **Tonello, Andrea**
**33100 Udine (IT)**

(74) Representative: **Petraz, Gilberto Luigi et al**
**GLP S.r.l.**
**Viale Europa Unita, 171**
**33100 Udine (IT)**

(56) References cited:
**WO-A1-93/21696**   **US-A- 6 141 634**

• **NICO WELING: "Flexible FPGA-based powerline channel emulator for testing MIMO-PLC, neighborhood networks, hidden node or VDSL coexistence scenarios", POWER LINE COMMUNICATIONS AND ITS APPLICATIONS (ISPLC), 2011 IEEE INTERNATIONAL SYMPOSIUM ON, IEEE, 3 April 2011 (2011-04-03), pages 12-17, XP031864580, DOI: 10.1109/ISPLC.2011.5764377 ISBN: 978-1-4244-7751-7**
• **VAN RENTERGHEM K ET AL: "A Reconfigurable Digital Platform for the Real-Time Emulation of Copper Access Networks", INSTRUMENTATION AND MEASUREMENT TECHNOLOGY CONFERENCE, 2005. IMTC 2005 . PROCEEDINGS OF THE IEEE OTTAWA, ON, CANADA 16-19 MAY 2005, PISCATAWAY, NJ, USA,IEEE, vol. 3, 16 May 2005 (2005-05-16), pages 1906-1911, XP010900787, DOI: 10.1109/IMTC.2005.1604503 ISBN: 978-0-7803-8879-6**

EP 2 882 109 B1

## Description

FIELD OF THE INVENTION

Forms of embodiment described here concern an emulation apparatus of complex cabled electric networks used as communication means for data transmission, such as, for example, lines designed for the distribution of electric energy. In particular, in accordance with some forms of embodiment, the emulation apparatus according to the present description is configured to replicate the characteristics of impedance, which vary with frequency, and possibly the characteristics of frequency response of the communication channel installed on a complex cabled electric network and is preferably, but not restrictively, applicable to emulate transmission channels that use carrier wave technologies, on power lines comprising electric lines, or coaxial cables or multi-row cables connected in a complex form in the presence of loads.

Forms of embodiment described here also concern a method to produce said emulation apparatus of a data transmission mean.

BACKGROUND OF THE INVENTION

In the design of cable communication systems, there is a need to copy, for example in the laboratory, the characteristics of the communication channels, installed on real, complex cabled networks, that is, networks consisting of numerous branches and with a large number of terminations to which a load can possibly be connected. In particular, for designing, inspecting and testing the technologies that use electric power lines for transporting signals and data, also known as carrier wave technologies or power line communications (PLC), it is useful to replicate the communication channel that connects two terminations of a complex network for distributing electric energy.

PLC technologies are used for example for communications between transceiver devices connected to two electric sockets of the same domestic power supply, between two nodes of an electric energy distribution network, with high, medium or low voltage, or between two electric terminations of which at least one, or both, is/are situated on board a mean of transport, such as planes, automobiles, boats or trains, or means powered by a cable, for example trolleybuses.

PLC technologies are particularly critical in that they are greatly influenced by the characteristics of the electric plant, which always consists of a multitude of cables and terminations that make the behavior very dissimilar from that of a single cable.

It is particularly useful to have the possibility of reproducing the characteristics of the communication means through compact apparatuses, to be used for example in the laboratory.

In fact, if an emulation apparatus is not available, then the communication systems can be tested only by complicated and costly experiments made directly in the complex cabled network in which the communication channel is inserted.

In this context, emulation apparatuses are known that allow to only partly reproduce a specific characteristic of a communication channel, and their use is mainly limited to telephone lines and video transmission, such as coaxial or duplex cables. The emulation apparatuses described in WO-A-93/21696 and GB-A-2.292.279 are examples of this, and reproduce expressly only the frequency response of single cables instead of complex cabled electric networks: they do not reproduce the impedance of the line and its dependence on the frequency.

To emulate the characteristics of the transmission mean, the transfer function or frequency response of the channel concerned is normally considered, or that of the electric network interposed between a signal input gate and a signal output gate, where the transmission and reception devices are connected.

In particular, the frequency response of the channel is defined as the ratio between the voltage on the output gate and the voltage on the input gate as a function of the frequency of the signal transmitted.

The frequency response describes the attenuation that the signal transmitted by a transmission device is subjected to when propagated toward a receiver. The attenuation is a function of the frequency. In individual cables in the hypothesis of adaptation, the attenuation grows monotonically with the frequency. On the contrary, in complex cabled electric networks, the frequency response is defined by an alternation of peaks, which are frequency windows of the transfer function for which the signal is weakly attenuated, and by troughs, which instead are frequency windows in which the signal is greatly attenuated.

The position and amplitude of peaks and troughs as the frequency varies depends on the topology of the electric network, the loads connected to the electric network, and the presence of distributed generators, such as for example photovoltaic plants, connected to the electric network.

Impedance is another quantity that characterizes the communication means or channel. Impedance describes the load seen from the transmitter connected to the electric network. In data communication means from a single cable, impedance can be assumed constant in the band concerned in the hypothesis of adaptation. In general, impedance is a complex quantity, consisting of a real part, that is, resistance, and an imaginary part, or reactance. The presence of multiple terminations and branches in real cabled networks, that is, complex cabled networks, determines a variable development of the impedance as a function of frequency, which is difficult to reproduce.

In particular, the absolute value of the impedance exhibits peaks and troughs, similar to the frequency response. In correspondence to the peaks, impedance is greater. In correspondence to the troughs, instead, impedance tends toward zero.

Emulation apparatuses are known, which comprise passive electronic components to emulate the frequency response of individual conductors. One limitation of such apparatuses is that they are not conceived to emulate the impedance and its dependence on frequency. Furthermore, they are not able to emulate the characteristics of a complex cabled network, such as for example the profile with peaks and troughs of the frequency response.

In particular, emulation apparatuses are known which comprise programmable electronic components, such as FPGA (Field Programmable Gate Array) or DSP (Digital Signal Processor), to generate the frequency response.

Examples of known emulation apparatuses can be found in "Flexible FPGA-based powerline channel emulator for testing MIMO-PLC, neighborhood networks, hidden node or VDSL coexistence scenarios", by N. Weling, 2011 IEEE International Symposium on Power Line Communicationsand Its Applications, p. 12-17, in "A Reconfigurable Digital Platform for the Real-Time Emulation of Copper Access Networks", by K. van Renterghem et al., Proceedings of the IEEE 2005 IMTC, p. 1906-1911, and in the patent application WO93/21696.

One disadvantage of such emulation apparatuses is that the programmable components are not able to faithfully reproduce all the characteristics of the data transmission means. In particular, they do not take into account the impedance seen from the input gate, and above all they are not able to replicate the impedance measured in real and complex scenarios.

There is therefore a need to perfect an emulation apparatus of complex cabled networks that can overcome at least one of the disadvantages of the state of the art.

In particular, one purpose of the present invention is to obtain an emulation apparatus of complex cabled networks which is reduced in size, that is, compact and easily transportable, and which allows to replicate characteristics of a real communication channel, such as impedance and the transfer function, also in remote conditions with respect to the real scenario from which the communication means has been extracted.

Another purpose of the present invention is to perfect a method for making an emulation apparatus which allows to reproduce, precisely and reliably, the frequency response and impedance of a specific communication channel measured or generated with known methodologies.

The Applicant has devised, tested and embodied the present invention to overcome the shortcomings of the state of the art and to obtain these and other purposes and advantages.

SUMMARY OF THE INVENTION

The present invention is set forth and characterized in the independent claims, while the dependent claims describe other characteristics of the invention or variants to the main inventive idea.

In accordance with the above purposes, the present invention concerns an emulation apparatus of complex cabled electric networks used as communication means for the transmission of data that overcomes the limits of the state of the art and eliminates the defects present therein.

In accordance with the present description, the emulation apparatus can be used to emulate or reproduce the physical and conduction characteristics of channels for the transmission of signals and data defined between two nodes (terminations) of complex cabled electric networks for the distribution of electric energy.

In accordance with some forms of embodiment described here, the emulation apparatus comprises at least an input gate for connection to a data transmission device and at least an impedance emulation device configured to specifically reproduce the behavior, as a function of the frequency of the impedance at the terminations of the complex cabled electric networks, where the data transmission device and a data reception device are connected.

In some forms of embodiment, the apparatus according to the present description can comprise at least a frequency response emulation device of the communication channel installed on said complex cabled electric network and at least an output gate configured for the connection of said data reception device. The impedance emulation device is autonomous and independent, that is, made apart, with respect to said frequency response emulation device.

The apparatus according to the present invention allows to design and test PLC communication systems, reproducing not only the impedance on entry, through the impedance emulation device, but also the frequency response through a frequency response emulation device.

Reproducing the impedance of the communication channel, and in particular its dependence on the frequency, renders the emulation much more faithful to reality compared to known solutions.

The present invention also concerns a method to produce an emulation apparatus of complex cabled electric networks used as communication means for the transmission of data. In particular, the method in accordance with the present description can be used to replicate both the impedance and the frequency response of a specific channel measured or generated with other known methodologies.

The production method according to the present invention comprises a step of sizing and producing an impedance emulation device to specifically reproduce the behavior, as a function of the frequency of the impedance at the terminations of the complex cabled electric networks and a possible step of sizing and producing a frequency response emulation device.

The method of the present invention allows, in a flexible way, to suitably size the components for the specific scenario that the emulation apparatus has to reproduce. On the contrary, methods known in the state of the art do not describe a procedure, and limit themselves to providing a specific and unchangeable set of values for the parameters.

In some forms of embodiment, the step of sizing and producing the frequency response emulation device comprises:

- a first sub-step of determining the suitable length of one or more phase shift cables for the emulation of the delay of a communication channel installed on the complex cabled electric network, comprised in a cabling stage of a frequency response emulation device;
- a second sub-step of determining the value of the series resistance comprised in the frequency response emulation device;
- a third sub-step of determining the type and value of parallel resonators downstream of the cabling stage and series resonators downstream of the cabling stage;
- a fourth sub-step of determining the type and value of parallel resonators upstream of the cabling stage and series resonators upstream of the cabling stage.

In some forms of embodiment, the step of sizing and producing an impedance emulation device comprises:

- a fifth sub-step of determining the values of resistance, capacity and inductance of electric resonators of an impedance emulation device configured to emulate the resistive component of an impedance measured or generated with known methodologies;
- a sixth sub-step of identifying the value of individual reactive components configured to refine the emulation of the reactive component of an impedance measured or generated with known methodologies, comprised in said impedance emulation device;
- a seventh sub-step of selecting electronic components configured to reproduce the values of resistance, inductance and capacity determined in the fifth sub-step and the individual reactive components identified in the sixth sub-step.

The production method according to the present invention allows to identify and calculate in a modular way the individual components used to reproduce the different characteristics of the real communication mean.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the description or in the attached dependent claims, can be the object of divisional applications.

It is understood that any aspect or characteristic that is discovered, during the patenting process, to be already known, shall not be claimed and shall be the object of a disclaimer.

BRIEF DESCRIPTION OF THE DRAWINGS

These and other characteristics of the present invention will become apparent from the following description of some forms of embodiment, given as a non-restrictive example with reference to the attached drawings wherein:

- fig. 1 is a three-dimensional view of some forms of embodiment of an emulation apparatus connected to a data transmission device and to a data reception device according to the present invention;
- fig. 2 is a block diagram of some forms of embodiment of an emulation apparatus according to the present invention;
- fig. 3 is a circuit diagram of some forms of embodiment of an impedance emulation device according to the present invention;
- fig. 4 is a circuit diagram of a detail of some forms of embodiment of a transfer function (frequency response) emulation device according to the present invention;
- fig. 5 is a block diagram of a method to produce an emulation device according to the present invention;
- fig. 6 is a block diagram of a method to produce a part of the emulation device according to the present invention;
- fig. 7 is a block diagram of a method to produce another part of the emulation device according to the present invention.

To facilitate comprehension, the same reference numbers have been used, where possible, to identify identical common elements in the drawings. It is understood that elements and characteristics of one form of embodiment can conveniently be incorporated into other forms of embodiment without further clarifications.

DETAILED DESCRIPTION OF FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

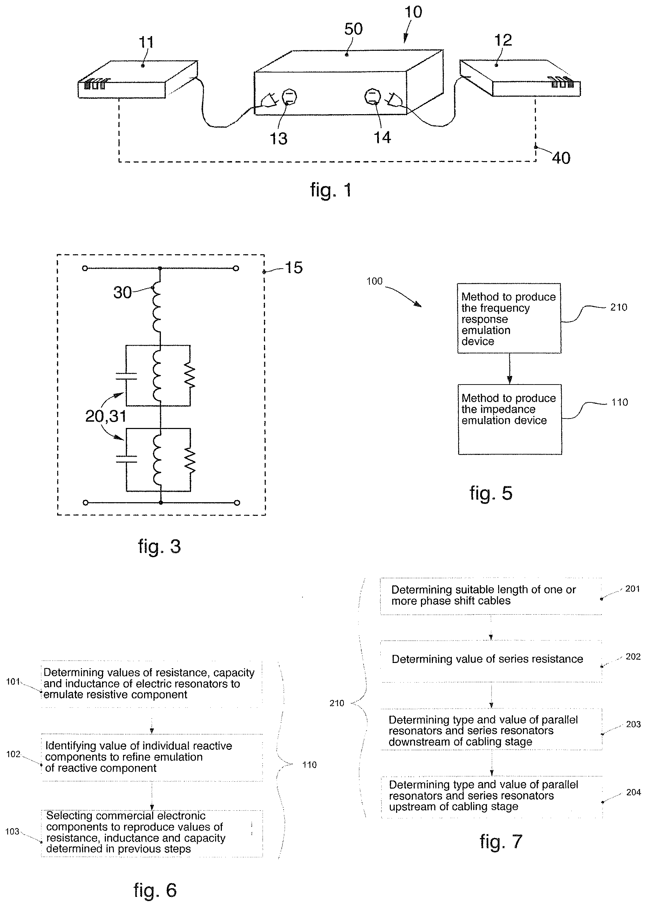

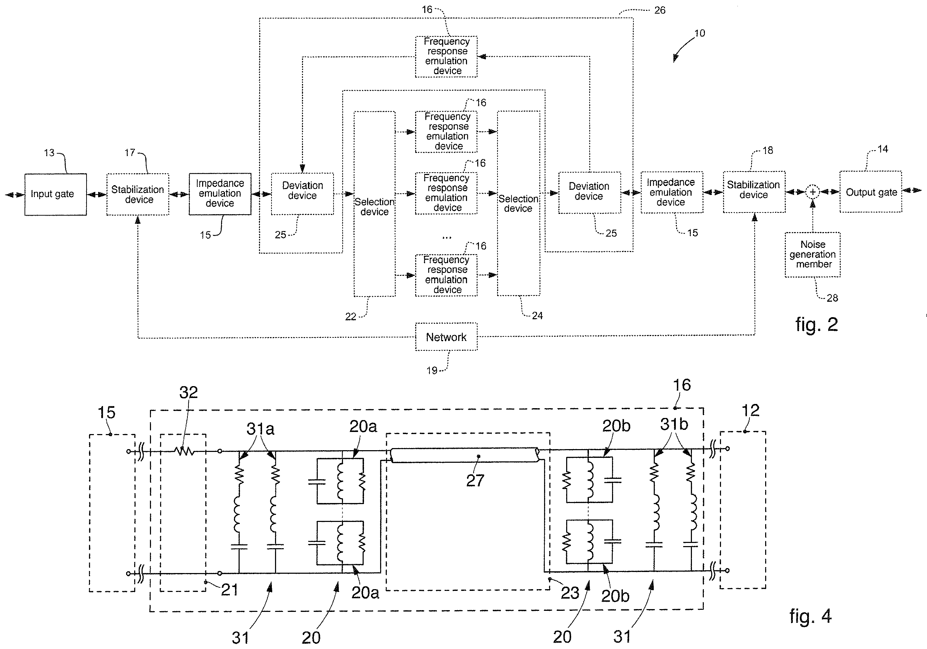

Figs. 1 and 2 are used to describe forms of embodiment of an emulation apparatus 10 of complex cabled electric networks, shown only schematically, according to the present invention.

The emulation apparatus 10 can be used to emulate, that is, to reproduce the physical characteristics of electric conduction and behavior as the frequency varies, of a communication channel, or communication means 40 installed on a complex cabled electric network and interposed between two terminations of the complex cabled electric network, such as for example an electric network of a building or a vehicle, which can comprise electric loads and devices.

In some forms of embodiment, the emulation apparatus 10 comprises an impedance emulation device 15 and at least an input gate 13 for connection to a data transmission device 11 (see for example fig. 2).

For example, the data transmission device 11 can be a modem, or the analog transceiver front end of a PLC system or other suitable data transmitter.

In forms of embodiment described with reference to fig. 2, and which can be combined with all the forms of embodiment described here, the emulation apparatus 10 can comprise, as well as the impedance emulation device 15, at least a frequency response emulation device, or transfer function emulation device, 16 of a communication channel 40 installed on a complex cabled electric network, which can be defined between two terminations of a complex cabled electric network, and an output gate 14, for example for connection to a data reception device 12, such as a modem, or an analog transceiver front end of a PLC system or other suitable data receiver.

In some forms of embodiment, the emulation apparatus 10 can comprise a box-like body 50 provided with the input gate 13 and which can contain the impedance emulation device 15.

In some forms of embodiment, the box-like body 50 can provide the output gate 14 and can contain the frequency response emulation device 16.

Forms of embodiment in which the emulation apparatus 10 comprises a single input gate 13 and a single output gate 14 can be used for example to emulate PLC channels with single input and single output, also called single-input single output (SISO).

In some forms of embodiment, the input gate 13 and/or the output gate 14 can comprise for example a BNC connector, an SMA connector or other similar or comparable connectors or representatives of an electric connector such as an electric socket.

In other forms of embodiment, the emulation apparatus 10 can comprise a plurality of input gates 13 and/or a plurality of output gates 14. In this case, the emulation apparatus 10 can be used for example to emulate PLC channels with multiple inputs and outputs, also called multiple-input multiple output (MIMO).

The frequency response emulation device 16 allows to reproduce the behavior of the communication channel 40 as the frequency of data transmission varies.

In some forms of embodiment, the frequency response emulation device 16 can be connected directly to the impedance emulation device 15, for example through a cascade connection.

In some forms of embodiment, the impedance emulation device 15 is autonomous and independent, that is, made apart, with respect to the frequency response emulation device 16

The impedance emulation device 15 is configured to reproduce the overall impedance of the communication channel 40.

The overall impedance of the communication channel 40 describes, that is, characterizes, the load seen from the data transmission device 11 connected at input to the communication channel 40 to be emulated.

The impedance of the communication channel 40 may not be constant as the frequency varies, and may have an extremely variable behavior, both in the imaginary part and in the real part, which is particularly complicated to reproduce and emulate.

This variable behavior is more emphasized if the data transmission device 11 and the data reception device 12 communicate using broad band signals. The propagation of the signal transmitted by the data transmission device 11 in the communication channel 40 to the data reception device 12 depends on the impedance of the communication channel 40 itself.

Consequently, providing an impedance emulation device 15 which reproduces the impedance characteristics of the communication channel 40 renders the emulation of the communication between the data transmission device 11 and the data reception device 12 more precise and reliable.

In some forms of embodiment, the impedance emulation device 15 is directly connected to the input gate 13, as described using fig. 2.

In variant forms of embodiment, not shown, the emulation apparatus 10 can comprise only the input gate 13 and the impedance emulation device 15, to emulate only the overall impedance of the communication channel 40.

In some forms of embodiment, the emulation apparatus 10 can comprise at least a stabilization device or network 17, 18, connected to a power network 19 of the emulation apparatus 10.

For example, two stabilization devices or networks 17, 18 can be provided, connected to the power network 19 of the emulation apparatus 10. In particular, a first upstream stabilization device or network 17 can be provided, configured to allow the selective propagation of the power signal toward the input gate 13 and the data signal from the input gate 13 to the impedance emulation device 15 without altering the characteristics of the latter.

In possible specific implementations, the first upstream stabilization device or network 17 can supply adequate power to the data transmission device 11, through the input gate 13, to block the propagation of the signal transmitted by the data transmission device 11 to a power network 19, and to allow the propagation of the signal transmitted by the data transmission device 11 to the impedance emulation device 15.

In possible specific implementations, a second downstream stabilization device or network 18 can be configured to supply adequate electric power to the data reception device 12, through the output gate 14, to block the propagation of the signal received to the power network 19, and to allow the propagation of the signal received through the output gate 14 to the data reception device 12.

The presence and position of the stabilization devices upstream 17 and downstream 18 can be described with reference to the connection blocks and segments shown schematically in fig. 2 by lines of dashes, to indicate that the stabilization devices upstream 17 and downstream 18 can be optional.

In some forms of embodiment, the stabilization devices upstream 17 and downstream 18 can comprise filter elements, configured to perform filtering operations on the electric quantities transmitted by the power network 19 or on signals on the input gate 13 or signals on the output gate 14.

For example, the upstream stabilization device 17 can be configured to perform a high-pass filter during the test of the data transmission device 11 on the input signal arriving from the input gate 13 to the impedance emulation device 15.

In some forms of embodiment, the emulation apparatus 10 can comprise a plurality of frequency response emulation devices 16, to reproduce and emulate the characteristics of a plurality of communication channels 40 installed on complex cabled electric networks, that is, data transmission channels.

In some forms of embodiment, the emulation apparatus 10 can include a plurality of impedance emulation devices 15 to emulate the impedances of several terminations of the communication means installed on complex cabled electric networks and/or a plurality of frequency response emulation devices 16 to emulate several communication channels 40 of the communication means installed on complex cabled electric networks.

In some forms of embodiment, selection devices can be provided, such as switches or active components, upstream 22 and downstream 24 of the frequency response emulation device 16, to select one of the various frequency response emulation devices 16.

The frequency response emulation device 16 allows to propagate signals, for example control or confirmation signals, from the data reception device 12 to the data transmission device 11.

In possible implementations, the emulation apparatus 10 can comprise a dedicated channel for the propagation of signals from the data reception device 12 to the data transmission device 11 through a feedback device 26. For example, the feedback device 26 can be configured to transmit data from the data reception device 12 to the data transmission device 11. In possible implementations, the feedback device 26 can also be used to emulate the frequency response and optionally the impedance of the channel from the reception device 12 to the data transmission device 11.

The feedback device 26 can comprise a deviation device 25 downstream of the downstream selection device 24 and a deviation device 25 upstream of the upstream selection device 22. The deviation devices 25 allow the one-directional propagation of the signal from the data transmission device 11 to the data reception device 12 and in the opposite direction following two distinct paths.

In possible implementations, the emulation apparatus 10 can comprise an impedance emulation device 15 downstream of the deviation device 25, to emulate the impedance seen from the data reception device 12 when it transmits the signals toward the data transmission device 11.

In some forms of embodiment, the emulation apparatus 10 can comprise a device or member 28 to generate interference, configured to simulate background noise, impulsive noise, or other type of interference.

In forms of embodiment described with reference to fig. 3, the impedance emulation device 15 can comprise electric resonators 20, 31.

The electric resonators 20, 31 typically comprise at least a resistor, inductor and capacitor.

In some forms of embodiment, the electric resonators 20 can be parallel resonators, that is, in which the components of each resonator are connected with each other in parallel.

In some forms of embodiment, the impedance emulation device 15 can comprise a plurality of parallel electric resonators 20 located in series with each other.

In some forms of embodiment, the electric resonators 31 can be series resonators, that is, in which the components of each resonator are connected with each other in series. In some forms of embodiment, the impedance emulation device 15 can comprise a plurality of series electric resonators 31, for example located in parallel with each other.

The electric resonators 20, 31 are a simple, precise and economical solution to reproduce the peaks and troughs of impedances measured in real electric networks, that is, the frequency dependence that distinguishes complex cabled electric networks.

In some forms of embodiment, the impedance emulation device 15 can comprise individual reactive components 30, such as an inductor (see fig. 3 for example), or a capacitor.

The individual reactive components 30 can be used to adapt phase shifts and to reproduce for example an inductive or capacitive behavior predominant in PLC lines.

In other forms of embodiment, the impedance emulation device 15 can comprise transformers, active components such as operational amplifiers or programmable logic components such as FPGA or DSP.

In forms of embodiment described with reference to fig. 4, the frequency response emulation device 16 can comprise individual input components, for example a series resistance 32, in this case belonging to an input stage 21.

The use of the series resistance 32 of the input stage 21 allows to replicate the attenuation of the communication channels 40 measured in real cabled electric networks.

The frequency response emulation device 16 can physically include, that is, it does not emulate, one or more phase shift cables 27, such as microwave cables, comprised for example in a cabling stage 23. The phase shift cables 27 can be provided to emulate the delay of the communication means or channel 40, installed on the complex cabled electric network.

Using phase shift cables 27 in the cabling stage 23 allows to precisely replicate the phase delay of the frequency response of the channels measured in complex cabled networks, for example electric networks.

In some forms of embodiment, the frequency response emulation device 16 can comprise parallel electric resonators 20, in this case parallel resonators upstream 20a of the cabling stage 23 and parallel resonators downstream 20b of the cabling stage 23.

In some forms of embodiment, the frequency response emulation device 16 can comprise series electric resonators 31, in this case series resonators upstream 31a of the cabling stage 23 and series resonators downstream 31 b of the cabling stage 23.

The parallel resonators downstream 20b reproduce the main peaks of the frequency response of the communication channel 40, while the series resonators downstream 31 b reproduce the troughs. The parallel resonators upstream 20a and the series resonators upstream 31a improve the fidelity with which the frequency response of the channel is reproduced.

In other forms of embodiment, the frequency response emulation device 16 can comprise active programmable components such as FPGA or DSP.

In particular, using FPGA or DSP allows to emulate communication channels 40 statistically, considerably increasing the number of embodiments that can be emulated for testing the devices. This allows a more reliable and complete design of the overall communication system comprising the communication channel 40, the data transmission device 11 and the data reception device 12.

With reference to fig. 5, forms of embodiment are described of a method 100 for producing an emulation apparatus 10 according to the present invention, which comprises a step of sizing and producing an impedance emulation device 110 to specifically reproduce the behavior as a function of the frequency of the impedance observed at the terminations of the complex cabled electric networks where the data transmission device 11 and the data reception device 12 are connected, and optionally a step of sizing and producing a frequency response emulation device 210.

The production method 100 allows to replicate precisely the frequency response and the impedance at the input termination of communication means or channel installed on complex cabled networks or generated with other known methodologies, and provides to suitably size the impedance emulation device 15 and the frequency response emulation device 16 as a function of the characteristics of the communication means to be emulated.

Fig. 6 shows a possible form of embodiment of the method to produce a frequency response emulation 210 to make a frequency response emulation device 16.

The step of sizing and producing a frequency response emulation 210 of the method 100 can comprise a first sub-step 201 of determining the suitable length of the one or more phase shift cables 27 comprised in the frequency response emulation device 16.

In particular, the length of the phase shift cable 27 can be obtained as the ratio between the frequency response step of the communication means to be emulated and the intrinsic phase constant of the type of phase shift cable 27 used. In reality, a value of said ratio can be obtained for each frequency in the range of use considered. In possible implementations, to determine the length it is possible to consider only determinate functioning frequencies.

In some forms of embodiment, the step of sizing and producing a frequency response emulation device 210 can comprise a second sub-step 202 of determining the value of the series resistance 32 comprised in the frequency response emulation device 16.

In some forms of embodiment, the series resistance 32 can be obtained by calculating the average channel gain (ACG).

The average channel gain can be calculated from the following formula:

$$ACG = 10 \log_{10}\left(\frac{1}{B}\int_{f_i}^{f_e}\left|H_T(f)\right|^2 df\right) \quad [dB]$$

where $B$ is the band width, $f_i$ and $f_e$ are respectively the start and end frequency of the signal band concerned, and $H_T(f)$ is the transfer function of the channel measured or generated through known methodologies at frequency $f$.

In some forms of embodiment, the step of sizing and producing a frequency response emulation device 210 can comprise a third sub-step 203 of determining the type and value of the parallel resonators downstream 20b of the cabling stage 23 and series resonators downstream 31b of the cabling stage 23.

In some forms of embodiment, the step of sizing and producing a frequency response emulation 210 can comprise a fourth sub-step 204 of determining the type and value of parallel resonators upstream 20a of the cabling stage 23 and series resonators upstream 31a.

In order to perform the third sub-step 203 and the fourth sub-step 204, a combination for example of commercial electric components can be used.

In some forms of embodiment, for the third sub-step 203 and the fourth sub-step 204 an iterative approach can be adopted.

For example, an electric resonator 20a, 20b, 31a, 31b may be added only if its addition supplies a reduction in the following metrics:

$$\Lambda = \int_{f_i}^{f_e} \left| \log_{10}\left|H_T\left(f\right)\right| - \log_{10}\left|H_G\left(f\right)\right| \right| df$$

where $H_G(f)$ is the frequency response calculated between the signal at entry to and exit from the frequency response emulation device 16.

The electric resonator 20a, 20b, 31a, 31b is chosen from a finite group of possible resonators, such as for example the group of resonators that supplies the greatest reduction in metrics.

In order, in the third sub-step 203 all the parallel resonators downstream 20b are added and sized first, then all the series resonators downstream 31b. Then, in the fourth sub-step 204, all the parallel resonators upstream 20b and finally all the series resonators upstream 31a are added and sized.

In forms of embodiment described with reference to fig. 7, the step of sizing and producing the impedance emulation device 110 of the production method 100 can comprise a fifth sub-step 101 of determining the values of resistance, capacity and inductance of the electric resonators 20, 31 of the impedance emulation device 15. In particular, the following procedure for identifying said values of resistance, capacity and inductance can for example be used.

First of all, the impedance $Z_T(f)$ of the communication channel 40 to be emulated at frequency $f$ is measured or generated through known methodologies.

The impedance $Z_T(f)$ can be given in terms of resistance and reactance or in terms of diffusion parameters or other consistent representations.

Subsequently, the entrance impedance $Z_{16}(f)$ of the frequency response emulation device 16 is calculated.

To obtain that the entrance impedance of the emulation apparatus 10 is equal to $Z_T(f)$, the impedance emulated by the impedance emulation device 15 must be equal to

$$Z_{15}\left(f\right) = \frac{Z_T\left(f\right)Z_{16}\left(f\right)}{Z_{16}\left(f\right) - Z_T\left(f\right)}.$$

If the emulation apparatus 10 includes only the input gate 13 and only the impedance emulation device 15, $Z_{15}(f)=Z_T(f)$.

In the fifth sub-step 101 the peaks of the real part are reproduced, that is, the resistive component, of the impedance of the impedance emulation device 15, $Z_{15}(f)$. In particular, the number of electric resonators 20, 31 used is equivalent to the number of peaks of the real part.

In preferential forms of embodiment, the number of peaks is identified as local maximums of the resistive component $R(f)$ of the impedance $Z_{15}(f)$ as a function of the frequency f. Hereafter, $f_0$ indicates the frequency to which a peak of $R(f)$ corresponds.

For every $f_0$, the values of the resistances of the different parallel electric resonators 20 are found as follows:

$$R_0 = R\left(f_0\right).$$

whereas the value of the capacitors and inductors are calculated as

$$L_0 = \frac{R_0}{2\pi f_\alpha} \cdot \left(1 - \frac{\left(2\pi f_\alpha\right)^2}{\left(2\pi f_0\right)^2}\right),$$

$$C_0 = \frac{1}{\left(2\pi f_0\right)^2 L_0},$$

respectively, where $f_\alpha$ is the frequency such that $R(f_\alpha)=\alpha R(f_0)$ with $f_\alpha > f_0$ and $\alpha = 0.8$.

The overall impedance of the series of electric resonators 20, 31 of the impedance emulation device 15 can be indicated with value $Z_P(f)$.

In some forms of embodiment, the step of sizing and producing an impedance emulation device 110 of the production method 100 can comprise a sixth sub-step 102 of identifying the value of the individual reactive components 30 comprised in the impedance emulation device 15, configured to simulate in the best possible way the reactive component of the impedance to be emulated.

For example, PLC networks have an impedance that has an inductive behavior, which can be emulated for example by using one or more series inductances.

Series inductances are obtained by observing the impedance to be emulated at the upper end of the band of frequencies to be emulated.

In particular, the value of the series of inductances can be obtained as follows:

$$L_s = \frac{\text{Im}\left\{Z_{15}\left(f_e\right)\right\} - \text{Im}\left\{Z_P\left(f_e\right)\right\}}{2\pi f_e}$$

where Im{·} denotes the imaginary part and $f_e$ denotes the upper end of the band.

In some forms of embodiment, the step of sizing and producing the impedance emulation device 110 can comprise a seventh sub-step 103 of identifying and finding the commercial components usable to reproduce the values of resistance, inductance and capacity determined in the fifth sub-step 101 and the individual reactive components 30 identified in the sixth sub-step 102.

Some forms of embodiment can provide to execute various steps, passes and operations as described above. The steps, passes and operations can be carried out with instructions performed by a machine that execute certain steps by a general-purpose or special-purpose processor. Alternatively, said steps, passes and operations can be carried out by specific hardware components that contain hardware logic to perform the steps, or any combination of programmed components for computers and personalized hardware components.

Some forms of embodiment of the method according to the present description can be included in a computer program, memorizable in a mean readable by a computer that contains the instructions that, once executed by a computer, determine the execution of the method in question.

In particular, elements according to the present invention can be supplied as means readable by a machine to memorize the instructions that can be executed by the machine. The machine-readable means can include, but are not limited to, floppy disks, optical disks, CD-ROM, and magneto-optical disks, ROM, RAM, EPROM, EEPROM, optical or magnetic boards, propagation means or other types of means readable by a machine and able to memorize electronic information. For example, the present invention can be downloaded as a computer program which can be transferred from a remote computer (for example a server) to a computer that makes a request (for example client), by means of data signals made with wave carriers or other propagation means, via a communication connection (for example a modem or network connection).

It is clear that modifications and/or additions of parts may be made to the emulation apparatus of a data transmission network and corresponding production method as described heretofore, without departing from the field and scope of the present invention.

It is also clear that, although the present invention has been described with reference to some specific examples, a person of skill in the art shall certainly be able to achieve many other equivalent forms of emulation apparatus of a data transmission network and corresponding production method, having the characteristics as set forth in the claims and hence all coming within the field of protection defined thereby.

Although the above refers to forms of embodiment of the invention, other forms of embodiment can be provided without departing from the main field of protection, which is defined by the following claims.

## Claims

1.  Apparatus for the emulation of complex cabled electric networks that are used as communication means for data transmission, **characterized in that** said apparatus comprises:

    - at least an input gate (13) for the connection to a data transmission device (11) and at least an impedance emulation device (15) configured to specifically reproduce the behavior, as a function of the frequency, of the impedance at the terminations of the complex cabled electric networks, where the data transmission device (11) and a data reception device (12) are connected;
    - at least a frequency response emulation device (16) of a communication channel (40) installed on said complex cabled electric network, said impedance emulation device (15) being autonomous with respect to said frequency response emulation device (16), and at least an output gate (14) configured for the connection of the data reception device (12);

    wherein said impedance emulation device (15) and said frequency response emulation device (16) comprise passive electric resonators (20, 31).

2.  Apparatus as in claim 1, **characterized in that** the frequency response emulation device (16) physically includes, that is, it does not emulate, one or more line phase shift cables (27) to emulate the delay of said communication channel (40).

3.  Emulation apparatus as in claims 1 or 2, **characterized in that** at least one of either said impedance emulation device (15) or said frequency response emulation device (16) comprises active electronic components, optionally programmable.

4. Apparatus as in claim 1, 2 or 3, **characterized in that** said apparatus comprises at least a member (28) for generating background noise, in particular impulsive noise, or other type of interferences.

5. Emulation apparatus as in any claim hereinbefore, **characterized in that** said apparatus comprises a plurality of impedance emulation devices (15) to emulate the impedances of several terminations of said complex cabled electric networks and/or a plurality of frequency response emulation devices (16) to emulate several communication channels (40) installed on said complex cabled electric networks.

6. Apparatus as in any claim hereinbefore, **characterized in that** said apparatus comprises at least a stabilization device upstream (17), configured to allow the selective propagation of the power signal toward the input gate (13) and the data signal from the input gate (13) to the impedance emulation device (15) without altering the characteristics of the latter and optionally a stabilization device downstream (18) configured to allow the selective propagation of the power signal toward the output gate (14) and the data signal from the frequency response emulation device (16) to the output gate (14) without altering the characteristics of the latter.

7. Apparatus as in any claim hereinbefore, **characterized in that** said apparatus comprises a feedback device (26) for the transmission of data from the data reception device (12) to the data transmission device (11) that can emulate the frequency response and optionally the impedance of the channel from the reception device (12) to the data transmission device (11).

8. Method to produce an apparatus for the emulation of complex cabled electric networks that are used as communication means for data transmission, **characterized in that** said method comprises at least a step (110) of sizing and producing an impedance emulation device (15) to specifically reproduce the behavior as a function of the frequency of the impedance at the terminations of the complex cabled electric networks, and a step (210) of sizing and producing a frequency response emulation device (16), wherein said impedance emulation device (15) and said frequency response emulation device (16) comprise passive electric resonators (20, 31).

9. Method as in claim 8, **characterized in that** said step (210) of sizing and producing a frequency response emulation device (16) comprises:

- a first sub-step (201) of determining the suitable length of one or more phase shift cables (27) so as to emulate the delay of a communication channel (40) installed on the complex cabled electric network, comprised in a cabling stage (23) of the frequency response emulation device (16);
- a second sub-step (202) of determining the value of the series resistance (32) comprised in the frequency response emulation device (16);
- a third sub-step (203) of determining the type and value of parallel resonators downstream (20b) of the cabling stage (23) and series resonators downstream (31b) of the cabling stage (23);
- a fourth sub-step (204) of determining the type and value of parallel resonators upstream (20a) of the cabling stage (23) and series resonators upstream (31a) of the cabling stage (23).

10. Production method as in claim 9, **characterized in that** for the third sub-step (203) and for the fourth sub-step (204) an iterative approach is provided wherein, in said third sub-step (203), all the parallel resonators downstream (20b) are added and sized first, then all the series resonators downstream (31b) are added and sized, and in the fourth sub-step (204) all the parallel resonators upstream (20a) are added and sized, and finally all the series resonators upstream (31a) are added and sized, **and in that** it provides to add an electric resonator (20a, 20b, 31 a, 31 b) only if its addition supplies a reduction in the following metrics:

$$\Lambda = \int_{f_i}^{f_e} \left| \log_{10} \left| H_T \left( f \right) \right| - \log_{10} \left| H_G \left( f \right) \right| \right| df$$

where $H_G(f)$ is the frequency response calculated between the entrance to and the exit from the frequency response emulation device (16), and $H_T(f)$ is the frequency response of said communication channel (40) installed on the complex cabled electric network to be emulated in the band comprised between the frequencies $f_i$ and $f_e$.

11. Production method as in claim 8, 9 or 10, **characterized in that** said step (110) of sizing and producing an impedance emulation device (15) comprises:

- a fifth sub-step (101) of determining the values of resistance, capacity and inductance of electric resonators (20, 31) of the impedance emulation device (15) configured to emulate the resistive component of an impedance measured or generated with known methodologies;
- a sixth sub-step (102) of identifying the value of individual reactive components (30), configured to refine the emulation of the reactive component of an impedance measured or generated with known methodologies, comprised in said impedance emulation device (15);
- a seventh sub-step (103) of selecting electronic components configured to reproduce the values of resistance, inductance and capacity determined in the fifth sub-step (101) and the individual reactive components (30) identified in the sixth sub-step (102).

12. Production method as in claim 11, **characterized in that** in said fifth sub-step (101) the impedance of the impedance emulation device (15) is put equal to

$$Z_{15}(f) = \frac{Z_T(f) \cdot Z_{16}(f)}{Z_{16}(f) - Z_T(f)}$$

where $Z_T(f)$ is the impedance to be emulated and $Z_{16}(f)$ is the input impedance of the frequency response emulation device (16); moreover in said fifth sub-step (101) the number of resonators used in the impedance emulation device (15) is fixed equal to the number of peaks (local maximums) of the real part $Z_{15}(f)$, and the value of components $R_0$, $L_0$ and $C_0$ of the individual components that constitute the resonator that emulates a peak at the frequency $f_0$ is fixed respectively equal to

$$R_0 = R(f_0),$$

$$L_0 = \frac{R_0}{2\pi f_\alpha} \cdot \left(1 - \frac{(2\pi f_\alpha)^2}{(2\pi f_0)^2}\right),$$

$$C_0 = \frac{1}{(2\pi f_0)^2 L_0},$$

where $f_\alpha$ is the frequency such that $R(f_\alpha)=\alpha R(f_0)$ with $f_\alpha > f_0$ and $\alpha = 0.8$.

13. Computer program memorizable in a mean readable by a computer that contains the instructions that, once executed by a computer, determine the execution of the method as in any of the claims from 8 to 12.

**Patentansprüche**

1. Vorrichtung zur Emulation komplexer verkabelter elektrischer Netzwerke, die als Kommunikationsmittel zur Datenübertragung verwendet werden, **da-**

**durch gekennzeichnet, dass** die genannte Vorrichtung Folgendes umfasst:

- zumindest einen Eingangsport (13) zur Verbindung mit einer Datenübertragungseinrichtung (11) und zumindest eine Impedanzemulationsvorrichtung (15), die dafür ausgelegt ist, um das Verhalten, in Abhängigkeit von der Frequenz, der Impedanz an den Abschlüssen der komplexen verkabelten elektrischen Netzwerke spezifisch wiederzugeben, wo die Datenübertragungseinrichtung (11) und eine Datenempfangseinrichtung (12) verbunden sind;
- zumindest eine Frequenzgangemulationsvorrichtung (16) eines Kommunikationskanals (40), der am genannten komplexen verkabelten elektrischen Netzwerk installiert ist, wobei die genannte Impedanzemulationsvorrichtung (15) von der genannten Frequenzgangemulationsvorrichtung (16) selbständig ist, und zumindest einen Ausgangsport (14), der für die Verbindung der Datenempfangseinrichtung (12) konfiguriert ist;

worin die genannte Impedanzemulationsvorrichtung (15) und die genannte Frequenzgangemulationsvorrichtung (16) passive elektrische Resonatoren (20, 31) umfassen.

2. Vorrichtung nach Anspruch 1, **dadurch gekennzeichnet, dass** die Frequenzgangemulationsvorrichtung (16) ein oder mehrere Streckenphasenverschiebungskabel (27) physikalisch umfasst, d.h. sie nicht emuliert, um die Verzögerung des genannten Kommunikationskanals (40) zu emulieren.

3. Emulationsvorrichtung nach Anspruch 1 oder 2, **dadurch gekennzeichnet, dass** zumindest eine von entweder der genannten Impedanzemulationsvorrichtung (15) oder der genannten Frequenzgangemulationsvorrichtung (16) aktive elektronische Komponenten umfasst, die optional programmierbar sind.

4. Vorrichtung nach Anspruch 1, 2 oder 3, **dadurch gekennzeichnet, dass** die genannte Vorrichtung zumindest ein Element (28) zur Erzeugung von Hintergrundgeräusch, insbesondere Impulsgeräusch, oder von anderen Arten von Störungen umfasst.

5. Emulationsvorrichtung nach einem der vorhergehenden Ansprüche, **dadurch gekennzeichnet, dass** die genannte Vorrichtung eine Vielzahl von Impedanzemulationsvorrichtungen (15), um die Impedanzen mehrerer Abschlüsse der genannten komplexen verkabelten elektrischen Netzwerke zu emulieren, und/oder eine Vielzahl von Frequenzgangemulationsvorrichtungen (16), um mehrere Kommunikationskanäle (40), die an den genannten komplexen verkabelten elektrischen Netzwerken installiert sind, zu emulieren, umfasst.

6. Vorrichtung nach einem der vorhergehenden Ansprüche, **dadurch gekennzeichnet, dass** die genannte Vorrichtung zumindest eine stromaufwärts gelegene Stabilisierungsvorrichtung (17), die so konfiguriert ist, um die selektive Ausbreitung des Leistungssignals in Richtung auf den Eingangsport (13) und des Datensignals aus dem Eingangsport (13) zur Impedanzemulationsvorrichtung (15) zu ermöglichen, ohne die Merkmale der letztgenannten zu ändern, und optional eine stromabwärts gelegene Stabilisierungsvorrichtung (18), die so konfiguriert ist, um die selektive Ausbreitung des Leistungssignals in Richtung auf den Ausgangsport (14) und des Datensignals aus der Frequenzgangemulationsvorrichtung (16) zum den Ausgangsport (14) zu ermöglichen, ohne die Merkmale des letztgenannten zu ändern, umfasst.

7. Vorrichtung nach einem der vorhergehenden Ansprüche, **dadurch gekennzeichnet, dass** die genannte Vorrichtung eine Rückmeldeeinrichtung (26) zur Übertragung von Daten aus der Datenempfangseinrichtung (12) an die Datenübertragungseinrichtung (11) umfasst, die den Frequenzgang und optional die Impedanz des Kanals aus der Empfangseinrichtung (12) zur Datenübertragungseinrichtung (11) emulieren kann.

8. Verfahren zur Herstellung einer Vorrichtung zur Emulation komplexer verkabelter elektrischer Netzwerke, die als Kommunikationsmittel zur Datenübertragung verwendet werden, **dadurch gekennzeichnet, dass** das genannte Verfahren zumindest einen Schritt (110) des Bemessens und des Herstellens einer Impedanzemulationsvorrichtung (15), um das Verhalten in Abhängigkeit von der Frequenz der Impedanz an den Abschlüssen der komplexen verkabelten elektrischen Netzwerke spezifisch wiederzugeben, und einen Schritt (210) des Bemessens und des Herstellens einer Frequenzgangemulationsvorrichtung (16) umfasst, worin die genannte Impedanzemulationsvorrichtung (15) und die genannte Frequenzgangemulationsvorrichtung (16) passive elektrische Resonatoren (20, 31) umfassen.

9. Verfahren nach Anspruch 8, **dadurch gekennzeichnet, dass** der genannte Schritt (210) des Bemessens und des Herstellens einer Frequenzgangemulationsvorrichtung (16) Folgendes umfasst:

- einen ersten Teil-Schritt (201) des Bestimmens der angemessenen Länge eines oder mehrerer Phasenverschiebungskabel (27), um die Verzögerung eines Kommunikationskanals (40), der am komplexen verkabelten elektrischen Netzwerk installiert ist, zu emulieren, welches in einer Verkabelungsphase (23) der Frequenzgangemulationsvorrichtung (16) umfasst ist;
- einen zweiten Teil-Schritt (202) des Bestimmens des Wertes des Reihenwiderstands (32), der in der Frequenzgangemulationsvorrichtung (16) umfasst ist;
- einen dritten Teil-Schritt (203) des Bestimmens der Art und des Wertes von Parallelresonatoren (20b), die stromabwärts der Verkabelungsphase (23) gelegen sind, und von Serienresonatoren (31b), die stromabwärts der Verkabelungsphase (23) gelegen sind;
- einen vierten Teil-Schritt (204) des Bestimmens der Art und des Wertes von Parallelresonatoren (20a), die stromaufwärts der Verkabelungsphase (23) gelegen sind, und von Serienresonatoren (31a), die stromaufwärts der Verkabelungsphase (23) gelegen sind.

10. Herstellungsverfahren nach Anspruch 9, **dadurch gekennzeichnet, dass** für den dritten Teil-Schritt (203) und für den vierten Teil-Schritt (204) ein iterativer Ansatz vorgesehen ist, worin, im genannten dritten Teil-Schritt (203), zuerst alle stromabwärts gelegenen Parallelresonatoren (20b) hinzugefügt und bemessen werden, dann alle stromabwärts gelegenen Serienresonatoren (31b) hinzugefügt und bemessen werden, und im vierten Teil-Schritt (204) alle stromaufwärts gelegenen Parallelresonatoren (20a) hinzugefügt und bemessen werden, und schließlich alle stromaufwärts gelegenen Serienresonatoren (31a) hinzugefügt und bemessen werden, **und dass** es vorsieht, einen elektrischen Resonator (20a, 20b, 31a, 31b) nur dann hinzuzufügen, wenn seine Hinzufügung eine Reduzierung in der nachfolgenden Metrik liefert:

$$\Lambda = \int_{f_i}^{f_e} \left| \log_{10} \left| H_T(f) \right| - \log_{10} \left| H_G(f) \right| \right| df$$

wo $H_G(f)$ der Frequenzgang ist, der zwischen dem Eingang in die und dem Ausgang aus der Frequenzgangemulationsvorrichtung (16) berechnet wird, und $H_T(f)$ der Frequenzgang des genannten, am komplexen verkabelten elektrischen Netzwerk installierten Kommunikationskanals (40) ist, welcher Frequenzgang in dem Band zwischen den Frequenzen $f_i$ und $f_e$ emuliert werden soll.

11. Herstellungsverfahren nach Anspruch 8, 9 oder 10, **dadurch gekennzeichnet, dass** der genannte Schritt (110) des Bemessens und des Herstellens einer Impedanzemulationsvorrichtung (15) Folgendes umfasst:

- einen fünften Teil-Schritt (101) des Bestimmens der Werte von Widerstand, Kapazität und Induktanz von elektrischen Resonatoren (20, 31) der Impedanzemulationsvorrichtung (15), die so konfiguriert sind, um den Widerstandsbestandteil einer Impedanz zu emulieren, die mit bekannten Methoden gemessen oder erzeugt wird;
- einen sechsten Teil-Schritt (102) des Identifizierens des Wertes einzelner Blindanteile (30), die so konfiguriert sind, um die Emulation des Blindanteils einer Impedanz zu verfeinern, die mit bekannten Methoden gemessen oder erzeugt wird, die in der genannten Impedanzemulationsvorrichtung (15) umfasst sind;
- einen siebten Teil-Schritt (103) des Auswählens elektronischer Komponenten, die so konfiguriert sind, um die Werte von Widerstand, Induktanz und Kapazität, die im fünften Teil-Schritt (101) bestimmt werden, und die einzelnen Blindanteile (30), die im sechsten Teil-Schritt (102) identifiziert werden, wiederzugeben.

12. Herstellungsverfahren nach Anspruch 11, **dadurch gekennzeichnet, dass** in dem genannten fünften Teil-Schritt (101) die Impedanz der Impedanzemulationsvorrichtung (15) Folgendem gleich gesetzt wird:

$$Z_{15}(f) = \frac{Z_T(f) \cdot Z_{16}(f)}{Z_{16}(f) - Z_T(f)}$$

wo $Z_T(f)$ die zu emulierende Impedanz ist und $Z_{16}(f)$ die Eingangsimpedanz der Frequenzgangemulationsvorrichtung (16) ist; ferner ist in dem genannten fünften Teil-Schritt (101) die Anzahl der Resonatoren, die in der Impedanzemulationsvorrichtung (15) eingesetzt sind, der Anzahl der Spitzenwerte (lokaler Maxima) des Realteils $Z_{15}(f)$ gleich gesetzt wird, und der Wert der Komponenten $R_0$, $L_0$ und $C_0$ der einzelnen Komponenten, die den Resonator bilden, der einen Spitzenwert bei der Frequenz $f_0$ emuliert, Folgendem gleich festgesetzt wird

$$R_0 = R(f_0),$$

$$L_0 = \frac{R_0}{2\pi f_\alpha} \cdot \left(1 - \frac{(2\pi f_\alpha)^2}{(2\pi f_0)^2}\right),$$

$$C_0 = \frac{1}{(2\pi f_0)^2 L_0},$$

wo $f_\alpha$ die Frequenz ist, so dass $R(f_\alpha) = \alpha R(f_0)$ ist, wobei $f_\alpha > f_0$ und $\alpha = 0{,}8$ ist.

13. Computerprogramm, das in einem von einem Computer lesbaren Medium gespeichert werden kann, das die Anweisungen enthält, die, nachdem sie von einem Computer durchgeführt werden, die Durchführung des Verfahrens nach einem der Ansprüche 8 bis 12 verursachen.

## Revendications

1. Appareil d'émulation de réseaux électriques câblés complexes utilisés comme moyens de communication pour la transmission de données, **caractérisé en ce que** ledit appareil comprend :

- au moins une porte d'entrée (13) pour la connexion à un dispositif de transmission de données (11) et au moins un dispositif d'émulation d'impédance (15) conçu pour reproduire spécifiquement le comportement, en fonction de la fréquence, de l'impédance aux terminaisons des réseaux électriques câblés complexes, où le dispositif de transmission de données (11) et un dispositif de réception de données sont connectés ;
- au moins un dispositif d'émulation de réponse en fréquence (16) d'un canal de communication (40) installé sur ledit réseau électrique câblé complexe, ledit dispositif d'émulation d'impédance (15) étant autonome par rapport audit dispositif d'émulation de réponse en fréquence (16), et au moins une porte de sortie (14) configurée pour la connexion du dispositif de réception de données (12) ;

dans lequel ledit dispositif d'émulation d'impédance (15) et ledit dispositif d'émulation de réponse en fréquence (16) comprend des résonateurs électriques passifs (20, 31).

2. Appareil selon la revendications 1, **caractérisé en ce que** le dispositif d'émulation de réponse en fréquence (16) comprend physiquement, ce qui veut dire qu'il n'émule pas, un ou plusieurs câbles déphaseurs de ligne (27) pour l'émulation du retard dudit canal de communication (40).

3. Appareil d'émulation selon la revendication 1 ou 2, **caractérisé en ce qu'**au moins un dudit dispositif d'émulation d'impédance (15) et dudit dispositif d'émulation de réponse en fréquence (16) comprend des composants électroniques actifs, éventuellement programmables.

4. Appareil selon la revendication 1, 2 ou 3, **caractérisé en ce que** ledit appareil comprend au moins un organe (28) de génération de bruit de fond, notamment de bruit impulsif, ou un autre type d'interférence.

5. Appareil d'émulation selon n'importe laquelle des revendications précédentes, **caractérisé en ce que** ledit appareil comprend une pluralité de dispositifs d'émulation d'impédance (15) pour émuler les impédances de plusieurs terminaisons desdits réseaux électriques câblés complexes et/ou une pluralité de dispositifs d'émulation de réponse en fréquence (16) pour émuler plusieurs canaux de communication (40) installés sur lesdits réseaux électriques câblés complexes.

6. Appareil selon n'importe laquelle des revendications précédentes, **caractérisé en ce que** ledit appareil comprend au moins un dispositif de stabilisation en amont (17), conçu pour permettre la propagation sélective du signal de puissance vers la porte d'entrée (13) et le signal de données de la porte d'entrée (13) au dispositif d'émulation d'impédance (15) sans altérer les caractéristiques de celui-ci et éventuellement un dispositif de stabilisation en aval (18) conçu pour permettre la propagation sélective du signal de puissance vers la porte de sortie (14) et le signal de données du dispositif d'émulation de réponse en fréquence (16) à la porte de sortie (14) sans altérer les caractéristiques de celle-ci.

7. Appareil selon n'importe laquelle des revendications précédentes, **caractérisé en ce que** ledit appareil comprend un dispositif de rétroaction (26) pour la transmission de données du dispositif de réception de données (12) au dispositif de transmission de données (11), pouvant émuler la réponse en fréquence et éventuellement l'impédance du canal du dispositif de réception (12) au dispositif de transmission de données (11).

8. Procédé de production d'un appareil d'émulation de réseaux électriques câblés complexes utilisés comme moyens de communication pour la transmission de données, **caractérisé en ce que** ledit procédé comprend au moins une étape (110) de dimensionnement et de production d'un dispositif d'émulation d'impédance (15) pour reproduire spécifiquement le comportement en fonction de la fréquence de l'impédance aux terminaisons des réseaux électriques câblés complexes, et une étape (210) de dimensionnement et de production d'un dispositif d'émulation de réponse en fréquence (16), dans lequel ledit dispositif d'émulation d'impédance (15) et ledit dispositif d'émulation de réponse en fréquence (16) comprend des résonateurs électriques passifs (20, 31).

9. Procédé selon la revendication 8, **caractérisé en ce que** ladite étape (210) de dimensionnement et de production d'un dispositif d'émulation de réponse en fréquence (16) comprend :

   - une première sous-étape (201) de détermination de la longueur approprié d'un ou plusieurs câbles déphaseurs (27) de manière à émuler un retard d'un canal de communication (40) installé sur le réseau électrique câblé complexe, compris dans un étage de câblage (23) du dispositif d'émulation de réponse en fréquence (16) ;
   - une deuxième sous-étape (202) de détermination de la valeur de la résistance en série (32) présente dans le dispositif d'émulation de réponse en fréquence (16) ;
   - une troisième sous-étape (203) de détermination du type et de la valeur des résonateurs en parallèle en aval (20b) de l'étage de câblage (23) et des résonateurs en série en aval (31b) de l'étage de câblage (23) ;
   - une quatrième sous-étape (204) de détermination du type et de la valeur des résonateurs en parallèle en amont (20a) de l'étage de câblage (23) et des résonateurs en série en amont (31a) de l'étage de câblage (23).

10. Procédé de production selon la revendication 9, **caractérisé en ce que,** pour la troisième sous-étape (203) et pour la quatrième sous-étape (204), une approche itérative est adoptée dans laquelle, dans ladite troisième sous-étape (203), tous les résonateurs en parallèle en aval (20b) sont ajoutés et dimensionnés les premiers, en suite tous les résonateurs en série en aval (31b) sont ajoutés et dimensionnés, et dans la quatrième sous-étape (204) tous les résonateurs en parallèle en amont (20a) sont ajoutés et dimensionnés et finalement tous les résonateurs en série en amont (31a) sont ajoutés et dimensionnées, et **en ce qu'**un résonateur électrique (20a, 20b, 31a, 31b) n'est ajouté que si son ajout comporte une réduction dans la métrique suivante :

$$\Lambda = \int_{f_i}^{f_e} \left| \log_{10} \left| H_T(f) \right| - \log_{10} \left| H_G(f) \right| \right| df$$

où $H_G(f)$ est la réponse en fréquence calculée entre l'entrée au et la sortie du dispositif d'émulation de réponse en fréquence (16), et $H_T(f)$ est la réponse en fréquence dudit canal de communication (40) installé sur le réseau électrique câblé complexe à émuler dans la bande comprise entre les fréquences $f_i$ et $f_e$

11. Procédé de production selon la revendication 8, 9 ou 10, **caractérisé en ce que** ladite étape (110) de dimensionnement et de production d'un dispositif d'émulation de réponse en fréquence (15) comprend :

- une cinquième sous-étape (101) de détermination des valeurs de résistance, capacité et inductance des résonateurs électriques (20, 31) du dispositif d'émulation d'impédance (15) conçu pour émuler la composante résistive d'une impédance mesurée ou générée avec des méthodologies nouvelles ;
- une sixième sous-étape (102) d'identification de la valeur des composantes réactives individuelles (30), conçues pour obtenir une émulation plus fine de la composante réactive d'une impédance mesurée ou générée par les méthodologies connues, présentes dans ledit dispositif d'émulation d'impédance (15) ;
- une septième sous-étape (103) de sélection de composantes électroniques conçues pour reproduire les valeurs de résistance, inductance et capacité déterminées dans la cinquième sous-étape (101) et les composantes réactives individuelles (30) identifiées dans la sixième sous-étape (102).

**12.** Procédé de production selon la revendication 11, **caractérisé en ce que,** dans ladite cinquième sous-étape (101) l'impédance du dispositif d'émulation d'impédance (15) est égale à

$$Z_{15}(f) = \frac{Z_T(f) \cdot Z_{16}(f)}{Z_{16}(f) - Z_T(f)}$$

où $Z_T(f)$ est l'impédance à émuler et $Z_{16}(f)$ est l'impédance d'entrée du dispositif d'émulation de réponse en fréquence (16); en plus, dans la cinquième sous-étape (101), le nombre de résonateurs utilisés dans le dispositif d'émulation d'impédance (15) est établi égal au nombre de pics (maximums locaux) de la partie réelle $Z_{15}(f)$, et la valeur des composantes $R_0, L_0$ et $C_0$ des composantes individuelles constituant le résonateur d'émulation d'un pic à la fréquence $f_0$ est établie respectivement égale à

$$R_0 = R(f_0),$$

$$L_0 = \frac{R_0}{2\pi f_\alpha} \cdot \left( 1 - \frac{(2\pi f_\alpha)^2}{(2\pi f_0)^2} \right),$$

$$C_0 = \frac{1}{(2\pi f_0)^2 L_0},$$

où $f_\alpha$ est la fréquence de manière que $R(f_\alpha) = \alpha R(f_\alpha)$ avec $f_\alpha > f_0$ et $\alpha = 0.8$.

**13.** Programme informatique pouvant être mémorisé sur un support lisible par un ordinateur, contenant les instructions qui, dès qu'elles sont exécutées par un ordinateur, déterminent l'exécution du procédé selon n'importe laquelle des revendications 8 a 12.

10

11

50

12

13 14

40

fig. 1

15

30

20,31

fig. 3

100

| Method to produce the frequency response emulation device | 210 |

| Method to produce the impedance emulation device | 110 |

fig. 5

101 — Determining values of resistance, capacity and inductance of electric resonators to emulate resistive component

102 — Identifying value of individual reactive components to refine emulation of reactive component

103 — Selecting commercial electronic components to reproduce values of resistance, inductance and capacity determined in previous steps

110

fig. 6

Determining suitable length of one or more phase shift cables — 201

Determining value of series resistance — 202

210

Determining type and value of parallel resonators and series resonators downstream of cabling stage — 203

Determining type and value of parallel resonators and series resonators upstream of cabling stage — 204

fig. 7

fig. 2

EP 2 882 109 B1

fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9321696 A

- GB 2292279 A

### Non-patent literature cited in the description

- **N. WELING.** Flexible FPGA-based powerline channel emulator for testing MIMO-PLC, neighborhood networks, hidden node or VDSL coexistence scenarios. *IEEE International Symposium on Power Line Communicationsand Its Applications,* 2011, 12-17

- A Reconfigurable Digital Platform for the Real-Time Emulation of Copper Access Networks. **K. VAN RENTERGHEM et al.** Proceedings of the IEEE. IMTC, 2005, 1906-1911